# EUROPEAN PATENT APPLICATION

(11) **EP 4 723 007 A1**
(43) Date of publication of application: **08.04.2026**
(21) Application number: 25206985.1
(22) Date of filing: 06.10.2025
(51) Int. Cl.: G06Q 10/0833, G06Q 30/018

(54) **METHOD AND SYSTEM FOR PRODUCT VERIFICATION AND CUSTOMER REWARDS, AND NON-TRANSITORY COMPUTER-READABLE MEDIUM**

(30) Priority: 06.10.2024 US 202463704013 P; 24.07.2025 US 202519278799
(71) Applicant: Stantchev, George, Phoenix, AZ 85032 (US)
(72) Inventor: Stantchev, George, Phoenix, AZ 85032 (US)
(74) Representative: Bals & Vogel Patentanwälte PartGmbB

(57) **Abstract**

A computer-implemented method for product verification and customer rewards includes: receiving, from a decentralized application (dApp) implemented on an electronic device (120) associated with a customer (50), information including a unique code linked a consumer product; verifying authenticity of the consumer product by validating the unique code against authorization records stored on a blockchain; upon successful verification, distributing a piece of a collective non-fungible token (NFT) linked to the consumer product to a digital wallet associated with the customer (50); and enabling staking of cryptocurrency tokens converted from the piece of the collective NFT in the digital wallet within the dApp to distribute rewards to the customer (50). The disclosure further relates to a system and a non-transitory computer-readable medium for implementing the method.

## Description

### CROSS REFERENCE TO RELATED PRESENT DISCLOSURE

This application claims priorities to and the benefits of U.S. Provisional Application No. 63/704,013, filed October 06, 2024, and U.S. Non-Provisional Application No. 19/278,799, filed July 24, 2025, the entire contents of which are hereby incorporated by reference.

### Technical Field

The present disclosure relates to digital product verification and customer engagement, more particularly to a blockchain-based method, system, and computer-readable medium for product verification and customer rewards.

### Related Art

Counterfeit consumer products present risks to consumers and undermine brand trust. Existing verification techniques often lack transparency, traceability, and interactivity. Thus, there is a need to provide a reliable system to verify product authenticity and provide automated mechanisms for customer rewards, thereby enhancing user engagement and loyalty.

### SUMMARY

The embodiments of the present disclosure provide a computer-implemented method for product verification and customer rewards and a corresponding system and a non-transitory computer readable storage medium, which can perform immutable blockchain-based verification of unique product codes, automatically distribute rewards via token staking, improve customer engagement through user interfaces, real-time notifications, and transparent audit trails, and execute staking mechanisms that incentivize both short-term and long-term product engagement.

The present disclosure provides a computer-implemented method for product verification and customer rewards, which includes: receiving, from a decentralized application (dApp) implemented on an electronic device associated with a customer, information including a unique code associated with a consumer product; verifying authenticity of the consumer product by validating the unique code against authorization records stored on a blockchain; upon successful verification, distributing a piece of a collective non-fungible token (NFT) linked to the consumer product to a digital wallet associated with the customer; and enabling staking of cryptocurrency tokens converted from the piece of the collective NFT in the digital wallet within the dApp to distribute rewards to the customer.

In one embodiment, the collective NFT is divided into a plurality of pieces, and each piece is linked to a unique code on a respective consumer product.

In one embodiment, the unique code is physically printed on or embedded in packaging of the consumer product and comprises at least one of: a QR code, a barcode, or a near-field communication code.

In one embodiment, each verification transaction is recorded on the blockchain to form an immutable audit trail.

In one embodiment, the staking comprises locking the cryptocurrency tokens for a predetermined time period, and the rewards are proportional to at least one of: (i) the amount of staked tokens, and (ii) the duration of the predetermined time period.

In one embodiment, the method further includes: executing smart contracts to govern at least one of: code authentication, NFT distribution, staking, and reward disbursement.

In one embodiment, the method further includes: providing, via the dApp, a user interface for displaying at least one of: the piece of the collective NFT, staking history, and reward distribution associated with the customer.

In one embodiment, the method further includes: enabling withdrawal of the staked cryptocurrency tokens and the rewards after completion of a selected staking period.

In one embodiment, the method further includes: implementing security measures to prevent duplication or fraudulent use of the unique code.

In one embodiment, the method further includes: providing real-time notification to the electronic device of the customer upon successful verification and distribution of the piece of the collective NFT.

The present disclosure further provides a system for product verification and customer rewards, which includes a database, at least one memory module and at least one processing module. The database is configured to store authorized codes. The at least one memory module stores programming instructions. The at least one processing module is connected to the at least one memory module and the database, and is configured to execute the programming instructions to: receive information including a unique code associated with a consumer product from a decentralized application (dApp) implemented on an electronic device associated with a customer; verify authenticity of the consumer product based on the information including the unique code using the database; distribute a piece of a collective non-fungible token (NFT) linked to the consumer product to a digital wallet associated with the customer upon successful verification; and enable staking of cryptocurrency tokens converted from the piece of the collective NFT in the digital wallet within the dApp to distribute rewards to the customer.

In one embodiment, the at least one processing module is further configured to execute the programming instructions to perform the method of the above embodiments.

In one embodiment, the dApp is implemented on a blockchain network.

In one embodiment, the cryptocurrency tokens operate on a blockchain network.

The present disclosure further provides a non-transitory computer readable storage medium storing instructions that, when executed by one or more processors, cause the one or more processors to perform the method of the above embodiments.

In each embodiment of the method, the system, and the non-transitory computer-readable medium of the present disclosure, it leverages the power of blockchain technology to ensure product authenticity and to reward customer loyalty. More particularly, the steps of verifying authenticity of the consumer product using the unique code are implemented to prevent counterfeiting, the steps of distributing the piece of the collective non-fungible token upon successful verification and enabling staking of cryptocurrency tokens converted from the piece of the collective NFT to distribute rewards to the customer are implemented to incentivize consumer engagement in a secure, automated way. Therefore, by verifying authenticity of the consumer product based on the unique code on each consumer product, distributing a collective NFT piece (i.e., the piece of the collective NFT linked to the consumer product) upon successful verification, and implementing a robust staking mechanism (i.e., enabling staking of cryptocurrency tokens converted from the collective NFT piece to distribute rewards), it can elevate the customer's experience with the product through interactive customer communication, to engage customers and reward their loyalty, which is crucial for building lasting brand relationships. Besides, a token platform using the system of the present disclosure provides a secure and engaging ecosystem for all consumer products and services.

### BRIEF DESCRIPTION OF THE DRAWINGS

The accompanying drawings described herein are used to provide further understanding for the present disclosure, and constitute a part of the present disclosure. The exemplary embodiments of the present disclosure and their descriptions are used to explain the present disclosure, and do not constitute an improper limitation of the present disclosure. In the accompanying drawings:
FIG. 1 depicts a block diagram representation of an operational architecture for implementing a computer-implemented method for product verification and customer rewards of an embodiment of the present disclosure;
FIG. 2 is a block diagram of an embodiment of a token platform;
FIG. 3 depicts an example of an original image corresponding to an NFT or a collection NFT;
FIG. 4 is a flow chart of a computer-implemented method for product verification and customer rewards according to an embodiment of the present disclosure; and
FIG. 5 is a flow chart of a computer-implemented method for product verification and customer rewards according to another embodiment of the present disclosure.

### DETAILED DESCRIPTION OF THE EMBODIMENTS

Prior to discussing embodiments of the present disclosure, some terms can be described in further detail.

An "electronic device" may be a device that can execute a decentralized application. Examples of electronic devices may be computing devices such as laptops, smartphones, smart watches, tablets, desktops, or other computing devices associated with users/customers/ manufacturers. The electronic device may provide communication capabilities to a network.

A "non-fungible token (NFT)" can be a tradable digital receipt stored on a publicly distributed database, called a blockchain, that everyone can see and independently verify at all times. The digital receipt contains unique information that can be used to prove who the sole owner of the certain item is, tangible or intangible. Unlike cryptocurrencies which are fungible tokens, NFTs have a non-fungible (e.g. unique or limited) component that can correspond to photographs, graphics, art, video, games or other media or imagery that can be displayed, used in authentication and/or to provide other support for transactions and/or used in game play and for other utilitarian purposes, etc., and no two products represented by NFTs are the same.

A "digital wallet" may contain electronic information for conducting transactions. A digital wallet may store user profile information, payment credentials, bank account information, cryptocurrency account information, one or more digital wallet identifiers and/or the like and can be used in a variety of transactions for retail purchases, digital goods purchases, and/or the like.

NFT creation and ownership is growing worldwide. The NFT market has grown into a significant sector of the crypto industry over 2021, with the total amount spent on purchasing NFTs surpassing $12.6 billion, up from $162.4 million at the start of the year. To compensate for the costs of the creation, buy, and trade of the NFTs on the Ethereum blockchain, many investors and creators simply try to offload their NFTs on secondary marketplaces, such as OpenSea and Solana, and bank a profit. In one example, NFT users can rent out or lend their NFTs in the reNFT marketplace to earn passive income. As another example, the creators can set terms that impose royalty fees whenever their NFTs, which are associated with their creations, change hands on the secondary market to receive passive income even after selling their creations to collectors. In yet another example, users can farm for yields using NFT-powered products, wherein yield farming refers to the method of leveraging multiple decentralized finance (DeFi) protocols to generate the highest possible yield with the digital assets you have.

In the present disclosure, a token platform is provided to manage one or more cryptographic ledgers (or "distributed ledgers") and provides flexible functionality. The token platform, which uses a system for product verification and customer rewards of the present disclosure, is configured to execute a computer-implemented method for product verification and customer rewards of the present disclosure to implement a verification mechanism and a staking mechanism to make consumers of the product earn cryptocurrency or additional rewards, thereby engaging customers and rewarding their loyalty, which is crucial for building lasting brand relationships.

The specific embodiments of the present disclosure given below are used to explain the implementation of the present disclosure. A person skilled in the art easily understands the advantages and the effects of the present disclosure from the content of the present disclosure.

It should be noted that the terms "comprising" and "having", and any variation thereof, are intended to encompass a non-exclusive inclusion, for example, a series of steps or units comprising processes, methods, systems, products or equipment do not need to be limited to those steps or units clearly listed but may include other steps or units not clearly listed or inherent to those processes, methods, products or equipment.

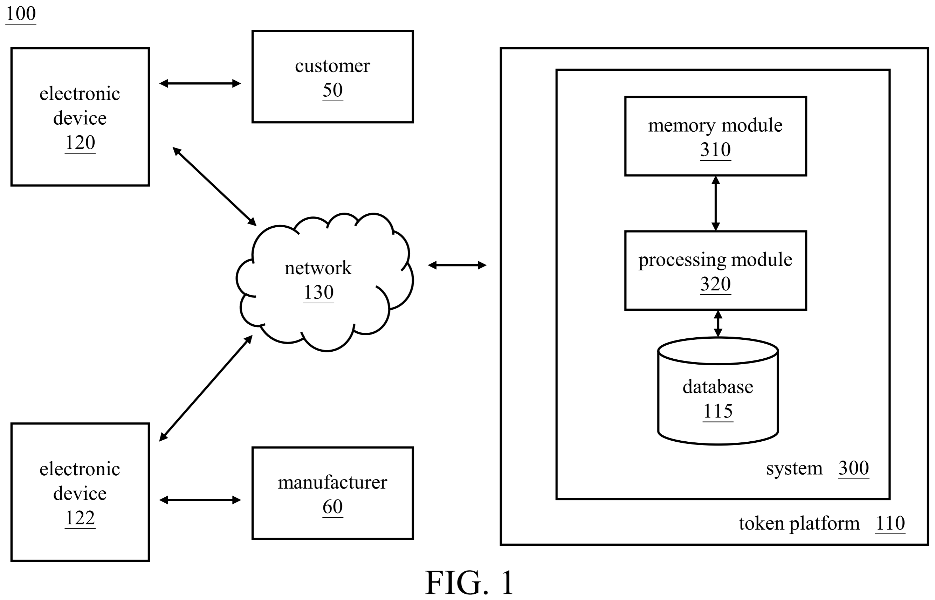

Please refer to FIG. 1, which depicts a block diagram representation of an operational architecture for implementing a computer-implemented method for product verification and customer rewards of an embodiment of the present disclosure. In particular, the operational architecture 100 is presented that includes a token platform 110 that communicates with an electronic device 120 associated with a customer 50 and an electronic device 122 associated with a manufacturer 60 via a network 130. The network 130 may be the Internet or other wide area or local area network, either public or private. The electronic device 120 and the electronic device 122 may access the token platform 100 via a decentralized application (dApp)/a web portal. For example, the customer 50 operates the electronic device 120 and opens the dApp on the electronic device 120 to display a user interface comprising data from the token platform 100, and the user interface can operate in response to interactions by the customer 50 to generate input data that is sent to the token platform 100 to control the operation of the token platform 100 and/or to provide other input. As another example, the manufacturer 60 operates the electronic device 122 and opens the dApp on the electronic device 122 to interact with the token platform 100.

The token platform 110 may comprise a system 300 for product verification and customer rewards, and the system 300 comprises a database 115, at least one memory module 310 and at least one processing module 320. The database 115 is configured to store authorized codes. The at least one memory module 310 has programming instructions stored thereon. The at least one processing module 320 is connected to the at least one memory module 310 and the database 115. The at least one processing module 320 is configured to execute the programming instructions to receive information including a unique code associated with a consumer product from a dApp implemented on an electronic device 120 associated with a customer 50; verify authenticity of the consumer product based on the information including the unique code using the database 115; distribute a piece of a collective non-fungible token (NFT) linked to the consumer product to a digital wallet associated with the customer 50 upon successful verification; and enable staking of cryptocurrency tokens converted from the piece of the collective NFT in the digital wallet within the dApp to distribute rewards to the customer 50. In one embodiment, the dApp is implemented on a blockchain network. In one embodiment, the cryptocurrency tokens operate on a blockchain network.

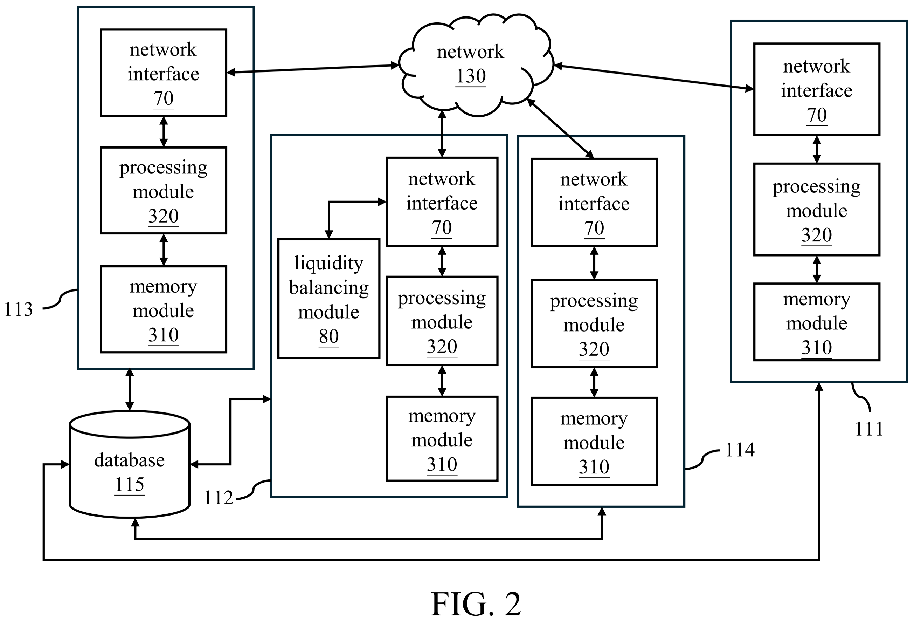

The number of memory modules 310 is one or more, and the number of processing modules 320 is one or more. In one embodiment, please refer to FIG. 2, which is a block diagram of an embodiment of a token platform. The number of memory modules 310 may be four, the number of processing modules 320 may be four, and the system 300 may comprise an NFT marketplace system 111, an NFT generation system 112, a verification system 113, and a digital wallet system 114 depending on the functions performed, wherein each of the NFT marketplace system 111, the NFT generation system 112, the verification system 113, and the digital wallet system 114 is similar to a server, and comprises a network interface 70 for communicating via the network 130, one processing module 320 connected to the network interface 70, and one memory module 310 that stores programming instructions and is connected to the processing module 320. The NFT marketplace system 111, the NFT generation system 112, the verification system 113, and the digital wallet system 114 are connected to the database 115 respectively, and the NFT marketplace system 111, the NFT generation system 112, the verification system 113, and the digital wallet system 114 can communicate with each other. It should be noted that the connection lines among the NFT marketplace system 111, the NFT generation system 112, the verification system 113, and the digital wallet system 114 are omitted to avoid making the drawing of FIG. 2 too complicated.

Please refer to FIG. 1 and FIG. 2, the customer 50 operates the electronic device 120 and opens the dApp on the electronic device 120 to interact with the NFT marketplace system 111 to browse, buy, sell, trade or auction NFTs. The NFT marketplace system 111 is configured to conduct an NFT transaction.

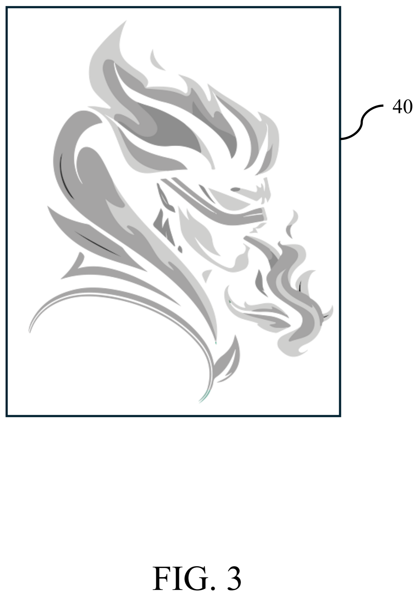

The NFT generation system 112 works on the network 130 (e.g., Solana) to generate a plurality of tokens (e.g., 1,000,000,000 tokens) for an NFT corresponding to an original image (e.g., an image 40 with a brand logo in FIG.3, which depicts an example of an original image corresponding to an NFT or a collection NFT), assign a digital value to each token when each token is staked in the digital wallet system 114 (i.e., a staking mechanism that happens in the dApp), and assign another digital value to the NFT to make it tradable on other crypto chains, wherein the process of assigning a digital value is called "mint", so it means that the NFT generation system 112 mints the tokens into other crypto type.

The verification system 113 operates to verify authenticity of a consumer product based on information including a unique code associated with the consumer product using the database 115. The digital wallet system 114 may support a digital wallet that stores the tokens of the consumer who purchases the consumer product. In embodiments, the digital wallet stores any tokens that are owned by the consumer associated with the digital wallet and provides an interface that allows the consumer to redeem, transfer, sell, exchange, or otherwise participate in transactions involving the token.

The database 115 collects data for the users and vendors involved in the system that should connect the users and the manufacturers through product availability and demands. For example, the database 115 collects information about customers, their purchases, preferences, and wallet information and authenticates and validates their purchases, which can be by category and variety, wherein the customers can use the electronic device 120 to log in the system 300 of the token platform 110 and update their preferences, and the login can be online or via the dApp. As another example, the database 115 collects information about the manufacturers, their locations, and the products they offer by variety and category, wherein the manufacturers can use the electronic device 122 to log in the system 300 of the token platform 110 and submit/update the above information regularly. In other words, the manufacturer manufactures a plurality of consumer products, places them in a plurality of stores and operates the electronic device 122 to enter the above information in the database 115 through the web portal/the dApp, and then the customer sees where those consumer products are available, in which store, made by which manufacturer, along with any consumer product related information such as flavor, color, and style. In addition, the database 115 can also propose choices from the available consumer products that are good for consumers.

When the programming instructions store in the memory module 310 are executed by the processing module 320 in each of the NFT marketplace system 111, the NFT generation system 112, the verification system 113, and the digital wallet system 114, the processing module 320 in each of the NFT marketplace system 111, the NFT generation system 112, the verification system 113, and the digital wallet system 114 is configured to perform respective functions based on the different programming instructions described herein. In other words, the NFT marketplace system 111, the NFT generation system 112, the verification system 113, and the digital wallet system 114 are shown as separate entities, and the token platform 110 can include or be implemented via one or more servers, or other decentralized or distributed computer system of individual computers and/or nodes and/or a centralized computing system. However, this embodiment is not intended to limit the present disclosure. In one embodiment, the NFT marketplace system 111, the NFT generation system 112, the verification system 113, the digital wallet system 114 and the database 115 are incorporated together.

The processing module 320 may be implemented via a single processing device or a plurality of processing devices. Such processing devices can include a microprocessor, micro-controller, digital signal processor, microcomputer, central processing unit, quantum computing device, field programmable gate array, programmable logic device, state machine, logic circuitry, analog circuitry, and/or digital circuitry. The memory module 310 may comprise a hard disc drive, a read-only memory, a random-access memory, a volatile memory, a non-volatile memory, a static memory, a dynamic memory, a flash memory, a cache memory, and/or any device that stores digital information.

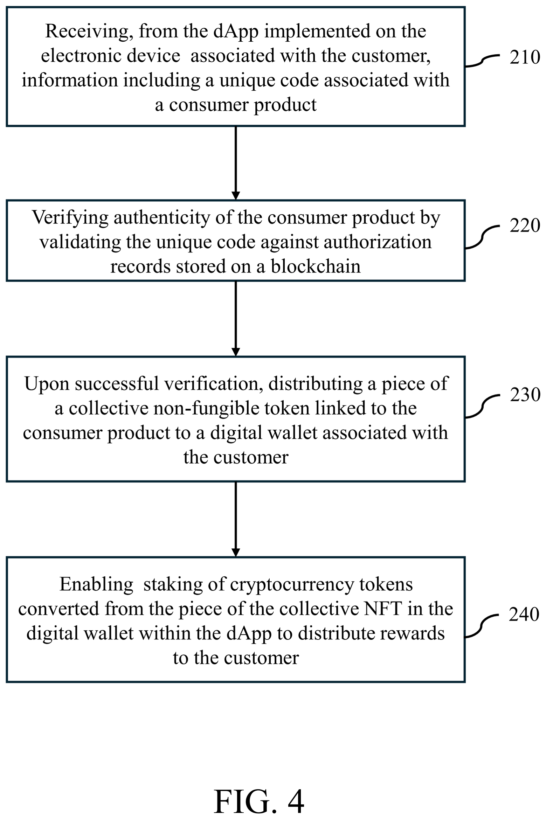

Please refer to FIG. 4, which is a flow chart of a computer-implemented method for product verification and customer rewards according to an embodiment of the present disclosure. The computer-implemented method for product verification and customer rewards of FIG. 4 may be applied to the operational architecture 100 of FIG. 1, and comprises the following steps: receiving, from the dApp implemented on the electronic device 120 associated with the customer 50, information including a unique code associated with a consumer product (step 210); verifying authenticity of the consumer product by validating the unique code against authorization records stored on a blockchain (step 220); upon successful verification, distributing a piece of a collective non-fungible token linked to the consumer product to a digital wallet associated with the customer 50 (step 230); and enabling staking of cryptocurrency tokens converted from the piece of the collective NFT in the digital wallet within the dApp to distribute rewards to the customer 50 (step 240), wherein steps 210 to 220 may be executed by the verification system 113, step 230 may be executed by the NFT marketplace system 111, and step 240 may be executed by the digital wallet system 114.

In step 210, the customer 50 purchases a consumer product with a unique code sold under the token platform 110, and then desires to verify whether the product at hand is authentic. Thus, the customer 50 operates the electronic device 120 and opens the dApp to make the electronic device 120 conduct a scanning operation to scan the unique code associated with the consumer product or to activate communication with a small chip of the consumer product to read the unique code associated with the consumer product in a dApp, and then sends the information including the unique code associated with the consumer product to the system 300 of the token platform 110 via the network 130. The unique code in the scanning operation may be a dimensional (2D) code, such as a quick response (QR) code and a bar code, the unique code in the small chip may be, but is not limited to, a near field communication (NFC) code in the NFC tag, and the unique code comprises at least one of: a QR code, a barcode, or an NFC code. The unique code is physically printed on or embedded in packaging of the consumer product. The consumer product sold under the token platform 110 may be, but is not limited to, a beverage product as a nonalcoholic product and an alcoholic product, a food product as an energy bar, a pizza and a raw product, an event pass as a concert ticket, an electronic product as a cell phone and headphones, a medical product, a supplement product, a cosmetic product as a cream and lotion, or a vaping product as an e-cigarette, and the consumer product may be sold within the price range of up to few hundred dollars. The operations of the dApp may be stored within the blockchain, and the dApp on the blockchain network can manage data storage in the system 300 of the token platform 110 and execute smart contracts.

In addition, the consumer brands (i.e., the manufacturers) can use the electronic device 122 to execute the dApp to open a token pool and upload the image 40 with a brand logo, as in FIG. 3, to the NFT generation system 112 of the token platform 110 to create a collective NFT (i.e., NFT registry with a crypto buy, store, and exchange network), to open their direct interaction with consumers to promote their brands, tap into new audiences, incentivize consumer engagement, launch product extensions and campaigns, and even sell physical consumer products. Specially, the NFT generation system 112 of the token platform 110 divides the collective NFT into a plurality of pieces (e.g., 1,000,000,000 separate pieces), and links each piece to a unique code on a respective consumer product, so that the unique code is connected to one piece of the collective NFT, each piece of the collective NFT is attached to a consumer product and sold with the cost of the consumer product, and the consumer products associated with one collective NFT should be identical in function and customer experience and/or made by the same manufacturer or quality-driven network to support that experience.

For example, the pieces of code are added to the NFT generation system 112, which works as example on the Solana, to make the NFT generation system 112 perform the following actions: generating 1,000,000,000 tokens for the collective NFT; creating a smart contract to divide the collective NFT into a plurality of pieces to make each piece of the collective NFT correspond to one token; making the staked token connected to a liquidity pool and paired with another crypto (this process called "mint"); and regulating the value of the generated collective NFT by a liquidity balancing module 80 drawing or injecting money in the NFT pool, wherein the liquidity balancing module 80 is configured to inject and draw money and regulate the overall NFT value to avoid dumping since some of the NFTs are donated to the supply chain, the liquidity balancing module 80 can be implemented by software and/or hardware, and the software may be stored in a machine-readable storage medium and may be performed by at least one general-purpose or dedicated programmable microprocessor. Thus, the NFT generation system 112, which works as example on Solana, is unique and the above-mentioned operations performed by executing the pieces of code on Solana network.

Moreover, in some embodiments, the dApp is built as example on Solana blockchain network because the Solana blockchain network provides high throughput, low transaction costs, and a robust ecosystem, and Solana's scalable infrastructure ensures seamless transactions and interactions within the dApp. Furthermore, the token platform 110 implements security measures to prevent duplication or fraudulent use of the unique code. In other words, the method may further comprise: implementing security measures to prevent duplication or fraudulent use of the unique code.

In step 220, after receiving the information including the unique code associated with the consumer product from the electronic device 120, the verification system 113 of the token platform 110 uses the database 115 to verify authenticity of the consumer product based on the information including the unique code of the consumer product. Specifically, the verification system 113 of the token platform 110 validates the unique code against authorized codes in the database 115 stored on a blockchain. By step 210 and step 220, it can prevent product counterfeiting.

In step 230, since the unique code is linked to a piece of the collective NFT, upon successful verification of the unique code, the verification system 113 of the token platform 110 distributes the piece of the collective NFT linked to the consumer product to the digital wallet associated with the customer 50 to ensure only the genuine product is recognized and rewarded. Thus, the digital wallet system 114 of the token platform 110 stores the piece of the collective NFT in the digital wallet associated with the customer 50. In other words, the digital wallet system 114 of the token platform 110 stores the piece of the collective NFT in the digital wallet as proof of product authenticity. As the consumer buys more consumer products, his digital wallet grows. The wallet's value inflates with the increased demand for the consumer products and the purchase of more NFTs. For example, companies and exhibitors at tradeshows may earn blockchain NFTs by purchasing event services (e.g., event passes); consumers can purchase T-shirts and clothing with NFTs included in the price; consumers earn NFTs from every beverage purchase and stack the NFTs in their digital wallets via the dApp; each magazine, along with its acquisition cost, can be an NFT-earning opportunity since magazines want subscribers, and each subscriber must incur acquisition costs.

In step 240, the user device 120 of the user performs a staking operation to convert the piece of the collective NFT in the digital wallet to the cryptocurrency tokens on a crypto network, and stake the cryptocurrency tokens to earn cryptocurrency or additional rewards, such as HNSTR and PRFEA tokens. In some embodiments, when the product is a vaping product, the cryptocurrency tokens may be Ultra Smooth Vape (USV) tokens operating as example on Solana network. Since security is fundamental for the USV tokens, USV is committed to adhering to all relevant regulatory requirements and performs regular security assessments and updates to maintain the integrity of the system. In addition, additional promotions, such as product offerings, news, and blogs, can be fetched through the dApp and the website, with specific incentives to buy more products and add more NFTs to the wallet. That is, extensive marketing campaigns are launched to increase user adoption and awareness. By step 230 and step 240, it can incentivize consumer engagement in a secure, automated way.

In the enabling the staking of the cryptocurrency tokens of step 240 may comprise: locking the cryptocurrency tokens for a predetermined time period, and the rewards are proportional to at least one of: (i) the amount of staked tokens, and (ii) the duration of the predetermined time period, wherein the predetermined time period may be selected from the group consisting of: one month, three months, six months, and twelve months. In other words, the staking process incentivizes long-term or short-term holding and engagement. The longer and larger the stake, the higher the rewards. Besides, the enabling of the cryptocurrency tokens of step 240 may further comprise: locking the cryptocurrency tokens with a withdrawal restriction, wherein the withdrawal restriction comprises flexible withdrawal, moderate withdrawal flexibility, limited withdrawal flexibility, or no early withdrawal.

According to step 210 to step 240, the computer-implemented method for product verification and customer rewards can elevate the customer's experience with the product through interactive customer communication, to engage customers and reward their loyalty, which is crucial for building lasting brand relationships.

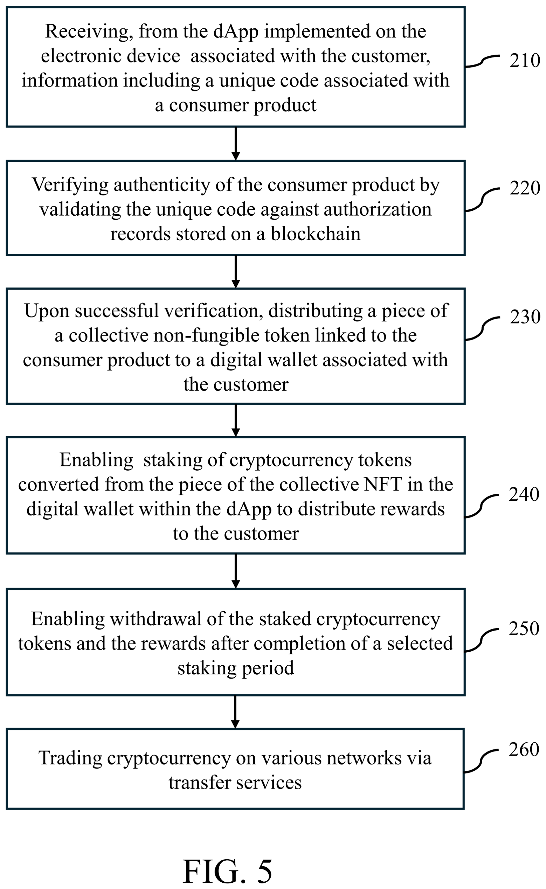

In one embodiment, as shown in FIG. 5, which is a flow chart of a computer-implemented method for product verification and customer rewards according to another embodiment of the present disclosure, the method further comprises: enabling withdrawal of the staked cryptocurrency tokens and the rewards after completion of a selected staking period (step 250). Since the staking operation executed by the digital wallet system 114 includes selecting the staking period (i.e., the predetermined time period mentioned above), the staked cryptocurrency tokens and rewards can be withdrawn after the staking period ends.

In one embodiment, as shown in FIG. 5, the method further comprises: trading cryptocurrency on various networks via transfer services (step 260). For example, the digital wallet system 114 of the token platform 110 trades the cryptocurrency in the digital wallet of the customer 50 with the trading platform (e.g., Bitunix and KCEX) to convert the tokens to value.

In one embodiment, the method further comprises: executing smart contracts to govern at least one of: code authentication, NFT distribution, staking, and reward disbursement. Specially, the smart contracts are executed to govern the code authentication of step 210 to step 220, NFT distribution of step 230, and staking mechanisms of step 240. The smart contracts are audited for security and efficiency to ensure a reliable and transparent system, wherein the smart contracts are deployed on blockchain.

In one embodiment, the method further comprises: recording each authentication transaction on a blockchain ledger to create an immutable record of product verification (, and the above step may be executed by the verification system 113. In other words, the method further comprises: each verification transaction is recorded on the blockchain to form an immutable audit trail, so that the transactions are immutably recorded on the blockchain to provide an audit trail.

In one embodiment, the method further comprises: providing, via the dApp, a user interface for displaying at least one of: the piece(s) of the collective NFT, staking history, and reward distribution. Thus, the customer 50 can use the electronic device 120 to log in the system 300 of the token platform 110 via the dApp and view the piece(s) of the collective NFT in their digital wallet. In addition, since each transaction including the code authentication, the NFT distribution, and the staking operation, is recorded on a blockchain ledger, the customer 50 can use the electronic device 120 to log in the system 300 of the token platform 110 via the dApp and view the staking history and reward distribution.

In one embodiment, the method further comprises: enabling combination of a plurality of the pieces of the collective NFT to form collectible digital assets, and the above step may be executed by the digital wallet system 114. Since the collective NFT is divided into a plurality of pieces, and each piece is linked to a unique code on a respective consumer product, the consumers need to purchase multiple consumer products when they want to collect the collective NFT, so as to achieve the effect of engaging customers and rewarding their loyalty.

In one embodiment, the method further comprises: providing real-time notification to the electronic device 120 upon successful verification and distribution of the piece of the collective NFT, and the above step may be executed by the digital wallet system 114. After step 230, the token platform 110 notifies the consumer 50 of the successful verification and NFT distribution through the electronic device 120.

In one embodiment, the method further comprises: enabling participation of the consumer 50 in community governance through ownership of the cryptocurrency tokens, and the above step may be executed by the digital wallet system 114. That is, the cryptocurrency token holders have voting rights over the future development of their ecosystems. Besides, the token platform 110 introduces additional features like reward programs and enhancements, including potential partnerships with other blockchain projects, based on community feedback.

In one embodiment, the method further comprises: distributing the rewards from a designated rewards pool comprising a predetermined percentage of total token supply, wherein the designated rewards pool can be a community digital wallet, and the predetermined percentage can be designed according to actual needs, and the above step may be executed by the digital wallet system 114.

In one embodiment, the method further comprises: determining a tiered reward structure based on frequency of consumer product purchases as verified to select the rewards distributed to the consumer 50, and the above step may be executed by the digital wallet system 114. Thus, the above method can engage customers and reward their loyalty thanks to the tiered reward structure determined by the frequency of consumer product purchases.

In one embodiment the dApp is configured to point to a store product location where the consumer product is purchased, outline at least one product characteristics of the consumer product, and/or disclose the most rewards in order to stimulate sales. In other words, the customer 50 can operate the electronic device 120 to execute the dApp to make the customer 50 know where he can buy the consumer product with best features or identity or in order to collect most or highest reward. Rewards are not only distributed via the consumer product but also distributed via the rewards pool using data stored in the database 115 (e.g., the information about the manufacturers, promos, sales rewards, and manufacturing pools) to the sales and manufacturing network, to encourage sales, consistency and stimulate referrals.

The following illustrates an example of the disclosure. The NFT generation system generates a collective NFT in a network, such as Solana for example. When the collective NFT is divided into 1 billion parts, it is locked in a smart contract and converted into 1,000,000,000 tokens. An initial sale price per token is launched (e.g., 20 cents for each token) in the dApp, and the tokens are sold from there. It should be noted that the price for each token is declared in advance, but it is not paid. The dApp implemented on an electronic device is operated by a user to receive information including a unique code associated with a consumer product to verify authenticity of the consumer product. Upon successful verification, a piece of a collective NFT (i.e., a token) linked to the consumer product is distributed to a digital wallet associated with the user, wherein the token the user obtains is visualized in his digital wallet, in which case it costs $0 since it is just an asset. The dApp implemented on the electronic device can be operated by the user to stake the token, which is in his digital wallet.

For the token that is already in the user's digital wallet to cost 20 cents, the token must be connected to a liquidity pool and paired with another crypto (e.g., USDT), and the process is called "mint". For this purpose, part of the tokens (e.g., 10,000 tokens) is put into the liquidity pool, and money (e.g., $2,000) is also put in the liquidity pool. It should be noted that more tokens and more money are put in the liquidity pool to maintain the price of the token. If people buy the token, the price of the token goes up. If those who have donated USDT decide to sell the token, the price per token drops. For example, if 1,000 people with donated USDT decide to sell the tokens, the total number of tokens in the liquidity pool becomes 11,000, and the price of the token will eventually drop to 0.018 cents, leaving only $200 in the liquidity pool. If this happens, it is needed to make more money put into the liquidity pool to restore the price. Therefore, if the price of the token needs to be kept constant, a liquidity balancing module 80 should be created. In the liquidity balancing module 80, if someone sells the token(s), the money is put in the liquidity pool; and if someone buys the token(s), the money is drawn from the liquidity pool.

In exemplary embodiments, the at least one processing module 320 of the system 300 is configured to execute the programming instructions to perform the above-described methods.

In exemplary embodiments, there is also provided a non-transitory computer-readable medium storing instructions, such as the memory module(s) 310 having programming instructions stored thereon, executable by the processor module(s) 320 in the system 300, for performing the above-described methods. For example, the non-transitory computer-readable medium may be a read-only memory (ROM), a random-access memory (RAM), a compact disc read-only memory (CD-ROM), a magnetic tape, a floppy disc, an optical data storage device, and the like.

In summary, the present disclosure leverages the power of blockchain technology to ensure product authenticity, prevent counterfeiting, reward customer loyalty, and provide immutable audit trails. More particularly, the steps of verifying authenticity of the consumer product using the unique code are implemented to prevent counterfeiting, the steps of distributing the piece of the collective non-fungible token upon successful verification and enabling staking of cryptocurrency tokens converted from the piece of the collective NFT to distribute rewards to the customer are implemented to incentivize consumer engagement in a secure, automated way. Therefore, by verifying authenticity of the consumer product based on the unique code on each consumer product, distributing a collective NFT piece (i.e., the piece of the collective NFT linked to the product) upon successful verification, and implementing a robust staking mechanism (i.e., enabling staking of cryptocurrency tokens converted from the collective NFT piece to distribute rewards), it can elevate the customer's experience with the product through interactive customer communication, to engage customers and reward their loyalty, which is crucial for building lasting brand relationships. Besides, the computer-implemented method for product verification and customer rewards of the present disclosure can enhance security and perform automation via smart contracts. Moreover, a token platform using the system of the present disclosure provides a secure and engaging ecosystem for all consumer products and services.

The above description shows and describes several preferred embodiments of the present disclosure. However, as mentioned above, it should be understood that the present disclosure is not limited to the form disclosed herein, and should not be regarded as excluding other embodiments, while embodiments of the present disclosure can be used in various other combinations, modifications and environments, and can be changed through the above teachings or technologies or knowledge in the related field within the scope of the concept of the present disclosure described herein. The modifications and changes made by those in the art without departing from the spirit and scope of embodiments of the present disclosure should fall within the protection scope of the claims attached to embodiments of the present disclosure.

## Claims

1. A computer-implemented method for product verification and customer rewards, comprising:
receiving, from a decentralized application (dApp) implemented on an electronic device (120) associated with a customer (50), information including a unique code associated with a consumer product;
verifying authenticity of the consumer product by validating the unique code against authorization records stored on a blockchain;
upon successful verification, distributing a piece of a collective non-fungible token (NFT) linked to the consumer product to a digital wallet associated with the customer (50); and
enabling staking of cryptocurrency tokens converted from the piece of the collective NFT in the digital wallet within the dApp to distribute rewards to the customer (50).

2. The method according to claim 1, wherein the collective NFT is divided into a plurality of pieces, and each piece is linked to a unique code on a respective consumer product.

3. The method according to claim 1 or 2, wherein the unique code is physically printed on or embedded in packaging of the consumer product and comprises at least one of: a quick response code, a barcode, or a near-field communication code.

4. The method according to any of the previous claims, wherein each verification transaction is recorded on the blockchain to form an immutable audit trail.

5. The method according to any of the previous claims, wherein the staking comprises locking the cryptocurrency tokens for a predetermined time period, and the rewards are proportional to at least one of: (i) the amount of staked tokens, and (ii) the duration of the predetermined time period.

6. The method according to any of the previous claims, further comprising: executing smart contracts to govern at least one of: code authentication, NFT distribution, staking, and reward disbursement.

7. The method according to any of the previous claims, further comprising: providing, via the dApp, a user interface for displaying at least one of: the piece of the collective NFT, staking history, and reward distribution associated with the customer (50).

8. The method according to any of the previous claims, further comprising: enabling withdrawal of the staked cryptocurrency tokens and the rewards after completion of a selected staking period.

9. The method according to any of the previous claims, further comprising: implementing security measures to prevent duplication or fraudulent use of the unique code.

10. The method according to any of the previous claims, further comprising: providing real-time notification to the electronic device (120) of the customer (50) upon successful verification and distribution of the piece of the collective NFT.

11. A system for product verification and customer rewards, comprising:
a database (115) configured to store authorized codes;
at least one memory module (310) storing programming instructions;
at least one processing module (320) connected to the at least one memory module (310) and the database (115), and configured to execute the programming instructions to:
receive information including a unique code associated with a consumer product from a decentralized application (dApp) implemented on an electronic device (120) associated with a customer (50);
verify authenticity of the consumer product based on the information including the unique code using the database (115);
distribute a piece of a collective non-fungible token (NFT) linked to the consumer product to a digital wallet associated with the customer (50) upon successful verification; and
enable staking of cryptocurrency tokens converted from the piece of the collective NFT in the digital wallet within the dApp to distribute rewards to the customer (50).

12. The system according to claim 11, wherein the dApp is implemented on a blockchain network.

13. The system according to claim 11 or 12, wherein the cryptocurrency tokens operate on a blockchain network.

14. The system according to any one of claims 11 to 13, wherein the at least one processing module is further configured to execute the programming instructions to perform the method of any of claims 1 to 10.

15. A non-transitory computer-readable medium storing instructions that, when executed by one or more processors, cause the one or more processors to perform the method of any of claims 1 to 10.
